# EUROPÄISCHE PATENTSCHRIFT

(11) **EP 0 596 564 B1**
(45) Veröffentlichungstag und Bekanntmachung des Hinweises auf die Patenterteilung: **22.09.1999**
(21) Anmeldenummer: 93203013.3
(22) Anmeldetag: 28.10.1993
(51) Int. Cl.: H04Q 7/36, H04B 7/26

(54) **Zellulares Mobilfunksystem mit dynamischer Kanalvergabe**
Cellular mobile radio system with dynamic channel allocation
Réseau cellulaire mobile à allocation dynamique de canaux

(30) Priorität: 02.11.1992 DE 4236982
(43) Veröffentlichungstag der Anmeldung: 11.05.1994
(73) Patentinhaber: Philips Patentverwaltung GmbH, 22335 Hamburg (DE); Koninklijke Philips Electronics N.V., 5621 BA Eindhoven (NL)
(72) Erfinder: Duque-Anton, Jesus-Manuel, c/o Philips, D-20097 Hamburg (DE); Kunz, Dietmar, Wilhelm, Dr., c/o Philips, D-20097 Hamburg (DE); Rüber, Bernhard Jakob, c/o Philips, D-20097 Hamburg (DE)
(74) Vertreter: Volmer, Georg, Dipl.-Ing.

(56) Entgegenhaltungen:
- EP-A- 0 488 173
- EP-A- 0 490 554

## Beschreibung

Die Erfindung betrifft ein zellulares Mobilfunksystem mit Feststationen und Mobilstationen, bei dem vorgesehen ist, die Vergabe eines Funkkanals in einer Funkzelle mittels einer Kanalliste vorzunehmen. Die Erfindung betrifft auch eine Steuervorrichtung für eine Feststation eines solchen Mobilfunksystems.

Mobilfunksysteme zur Abdeckung eines größeren Versorgungsbereiches werden schon seit längerem als zellulare Funknetze konzipiert. In jeder Zelle eines solchen Funknetzes ist mindestens eine ortsfeste Feststation vorgesehen, die die Funkverbindung zu den in Ihrer Funkzelle befindlichen Mobilstationen aufrecht erhält. Um das für das jeweilige Funksystem verfügbare Frequenzband einer möglichst großen Teilnehmerzahl im gesamten Mobilfunksystem zugänglich zu machen, kommt der Funknetzplanung eine besondere Bedeutung zu.

Bei der Funknetzplanung wird jeder Feststation aus der Gesamtzahl der verfügbaren Funkkanäle eine beschränkte Auswahl von Funkkanälen zugewiesen. In benachbarten Funkzellen werden sich voneinander unterscheidende Funkkanäle benutzt, so daß eine Beeinträchtigung der Funkkanäle untereinander vermieden werden kann. Wegen des beschränkten Frequenzbandes müssen die Funkkanäle im gesamten Funknetz aber so oft wie möglich wiederverwendet werden, um eine möglichst hohe Teilnehmerkapazität zu erzielen. Das Verhältnis von Gesamtzahl der Funkzellen zu der Anzahl der Wiederholungen von gleichen Frequenzen wird hierbei als Wiederholungsfaktor (reuse-factor) bezeichnet.

Bei der Erstellung eines Kanalverteilungsplans ist auch der Kanalbedarf jeder Funkzelle zu berücksichtigen. Der Kanalbedarf einer Funkzelle ergibt sich aus der Größe der Funkzelle und dem örtlich zu erwartenden Funkverkehrsaufkommen. Hierbei sind beispielsweise im Bereich einer Großstadt mehr Funkkanäle erforderlich, als in einem rein ländlichen Gebiet. Teilweise werden daher auch schon Funkzellen variabler Größe vorgesehen. In sogenannten Kleinzellen, die eine entsprechend verminderte Sendeleistung erlauben, wird die Wiederbenutzung eines Funkkanals in schon geringerem Abstand von der Kleinzelle ermöglicht.

Wie weit Funkzellen zur Vermeidung einer Funkstörung voneinander entfernt sein müssen, ist von vielen Faktoren abhängig. Diese Faktoren sind beispielsweise die Sendeleistung und die Funkwellenausbreitungsbedingungen. Die Funkwellenausbreitungsbedingungen werden insbesondere bestimmt durch im Funkübertragungsweg auftretende Abschattungen, Beugungen, Streuungen, Reflexionen und Mehrwegeausbreitung.

Bei der Planung von Funkzellen werden zur Berücksichtigung der Funkwellenausbreitungsbedingungen topografische Daten (wie Geländehöhe, Bebauung etc.) mittels statistischer Methoden modelliert oder durch Meßfahrten mit Meßwagen entsprechende Daten ermittelt. Mit Verfahren wie beispielsweise Graphenfärbung können sich gegenseitig störende Funkkanäle hinreichend weit auseinanderliegenden Funkzellen zugeordnet werden. Somit ist jeder Funkzelle eine bestimmte Anzahl von Funkkanälen als Kanalliste von Anfang an fest zugewiesen. Bei einer Kanalanforderung wird ein beliebiger freier Kanal aus der zugeordneten Kanalliste ausgewählt.

Ein solches Kanalvergabeverfahren ist beispielsweise aus EP 0 490 554 A2 bekannt, bei welchem zur effektiven Ausnutzung des vorhandenen Frequenzspektrums logische Abbilder einer Zelle verwendet werden, welche durch geografische Gegebenheiten, Sendeantenneneigenschaften und Sendeleistung die tatsächlichen Wellenausbreitungsbedingungen berücksichtigen. Mit der jedem logischen Abbild einer Zelle zugeordneten Verkehrsbelastung, welche anhand von entsprechend ausgewählten Faktoren, wie beispielsweise Belegungsrate, Blockierungsrate, Gesprächsübergabeschwellwert, Zugriffsschwellwert, Gesprächsabbruchverhältnis usw. berücksichtigt wird, wird mittels eines Signalmatrixcomputers eine Signal-/Interferenzmatrix-Matrix entwickelt, welche schließlich zur Vergabe der Funkkanäle benutzt wird.

Auch bei einer aus EP 0 488 173 A2 bekannten Anordnung zur Vergabe von drahtlosen Kommunikationskanälen, in welcher in einer Kanalvergabetabelle Zugriffsbeschränkungen für einzelne Funkkanäle vorgegeben werden können, müssen diese Beschränken durch einen Benutzer vor Inbetriebnahme des Kommunikationssystems vorgegeben werden. Hierbei kann der Zugriff auf einen bestimmten drahtlosen Kommunikationskanal entweder vollständig ausgeschlossen werden oder auch nur auf bestimmte Tageszeiten, Tage oder Monate begrenzt werden. Die Kanalvergabetabelle wird bei Inbetriebnahme durch einen Benutzer beispielsweise über eine Tastatur eingegeben und kann bedarfsweise durch den Benutzer an Änderungen der Funkstationsumgebung angepaßt werden. Bei Anforderung eines Sprechkanals werden alle Sprechkanäle in einer vorgebbaren Reihenfolge durchsucht, bis ein freier Sprechkanal gefunden wird, welcher den Beschränkungen der Kanalvergabetabelle hinsichtlich Uhrzeit, Wochentag oder Monat entspricht. In einer anderen Ausgestaltung der in EP 0 488 173 A2 beschriebenen Anordnung zur Vergabe von drahtlosen Kommunikationskanälen wird die Kanalvergabetabelle fortlaufend aktualisiert, wobei für jeden Kommunikationskanal sowohl die Anzahl aller Fehlbelegungsversuche als auch die Anzahl aufeinanderfolgender Fehlbelegungsversuche gespeichert werden. Überschreitet hierbei das Verhältnis der Fehlbelegungsversuche zu den Belegungen insgesamt einen bestimmten Schwellwert, so wird der jeweilige Kanal für eine vorgebbare Zeitdauer gesperrt. Hierzu wird der Zeitpunkt des letzten Belegungsversuches ausschließlich zu dem Zweck in der Kanalvergabetabelle gespeichert, um zu erkennen ob die Zeitspanne, innerhalb derer auf einen Kommunikationskanal nicht zugegriffen werden darf, bereits abgelaufen ist.

Bei sogenannten dynamischen Kanalvergabeverfahren wird erst bei Auswahl eines Kanals geprüft, ob sich dieser Kanal mit der gerade im Netz bestehenden Kanalbelegung verträgt. Ist dies nicht der Fall, so wird ein nächster Kanal ausgewählt. Wegen der Überprüfung der Kanalverträglichkeit in jedem Einzelfall, kann bei dynamischer Kanalvergabe die jeder Funkzelle zugeordnete Kanalliste auch auf alle insgesamt zur Verfügung stehenden Kanäle ausgedehnt werden.

In EP 0 202 485 A2 ist ein dynamisches Kanalvergabeverfahren beschrieben, welches auch unter dem Namen "channel segregation" bekannt ist. Bei diesem Kanalvergabeverfahren ist jedem Kanal zusätzlich eine Priorität zugeordnet. Bei einer Kanalanforderung werden die Kanäle in absteigender Priorität auf ihre Verträglichkeit untersucht. Kann ein Kanal ausgewählt werden, so wird dessen Priorität erhöht; kann ein Kanal nicht ausgewählt werden, so wird dessen Priorität erniedrigt. Durch die Priorisierung von Kanälen wird erreicht, daß sich in den einzelnen Funkzellen jeweils eine andere Reihenfolge einstellt, in der die Kanäle untersucht werden; wobei in jeder Funkzelle die Kanäle mit einer hohen Priorität bevorzugt werden. Durch die Erhöhung beziehungsweise die Erniedrigung von Prioritäten ist somit auch eine Möglichkeit gegeben, mit der sich die Kanalverteilung im Funknetz selbst optimiert beziehungsweise gegebenenfalls selbst reorganisiert.

Bei begrenztem Kanalangebot geht die Steigerung der Anzahl der einer Funkzelle zugewiesenen Funkkanäle somit immer zu Lasten des Kanalangebots in den benachbarten Funkzellen. Durch den weiter steigenden Bedarf nach mobiler Kommunikation werden sowohl die zur Zeit existierenden als auch die im Aufbau befindlichen Mobilfunknetze kurz- bzw. mittelfristig ihre Kapazitätsgrenzen erreichen.

Nur durch die auf statistischer Grundlage getroffenen Vereinfachungen ist bei den bekannten Methoden der Planungsaufwand in vertretbaren Grenzen zu halten. Gerade aber bei Klein- und Kleinstzellen sind die statistischen Vereinfachungen nicht mehr zulässig, weil die berechneten Daten zunehmend unsicherer werden. Bereits geringfügige Änderungen der Infrastruktur einer Klein- bzw. Kleinstfunkzelle, auch wenn sie nur vorübergehender Natur sind, können zu einer funktechnisch oder verkehrsmäßig vollständig anderen Situation führen, so daß mit den vorgeplanten Daten ein ordnungsgemäßer Betrieb der Funkzelle nicht aufrechtzuerhalten ist.

Eine Straßenbaustelle beispielsweise, die anhaltende Verkehrsstaus hervorruft, läßt dadurch auch die Anzahl der (Funk)-Verkehrsteilnehmer in einer Zelle drastisch ansteigen. Da wegen des begrenzten Kanalangebots nicht in jeder Funkzelle für jede auch nur denkbare Situation ein entsprechend ausreichendes Kanalangebot vorgesehen sein kann, führen geänderte Funk- und (Funk)-Verkehrssituationen zu Überlastungen von Funkzellen, mit den bekannten Nachteilen, wie Abweisung eines Gesprächswunsches oder Gesprächsabbrüchen wegen eines fehlenden freien Kanals.

Aufgabe der Erfindung ist es, bei einem Mobilfunksystem der eingangs genannten Art Möglichkeiten zur Optimierung des Funknetzes während seines Betriebes zu schaffen.

Diese Aufgabe wird dadurch gelöst, daß die Erfassung und Klassifizierung von verschiedenen Funksituationen vorgesehen ist und zu jeder klassifizierten Funksituation eine eigene Kanalliste vorgesehen ist.

Je nachdem welcher Aufwand gerechtfertigt erscheint, kann eine Funksituation durch räumliche Komponenten oder durch zeitliche Komponenten oder einer Kombination dieser Komponenten erfaßt werden. Die räumliche Komponente berücksichtigt den Funkort einer Mobilstation. Der Funkort einer Mobilstation kann beispielsweise mittels Signalstärkemessungen ermittelt werden. Die zeitliche Komponente ist die augenblickliche Kanalsituation, beispielsweise die aktuelle Kanalbelegung. Durch Klassifikation, beispielsweise durch Vergleich der einzelnen Komponenten mit vorgegebenen Schwellwerten wird die Vielzahl der möglichen Funksituationen auf eine geringe Anzahl von klassifizierten Funksituationen reduziert. Zu jeder dieser klassifizierten Funksituationen wird eine eigene Kanalliste geführt. Bei einer Kanalanforderung, beispielsweise für einen Gesprächsaufbau oder für eine Geprächsweiterreichung wird jeweils aus der Kanalliste, die der gerade aktuellen Funksituation zugeordnet ist, ein Kanal ausgewählt.

Eine einer jeweiligen Funksituation angepaßte Kanalliste muß nicht zwangsweise andere Kanäle enthalten als die anderen Kanallisten. Die Kanallisten können sich beispielsweise durch unterschiedliche Zuweisungsverfahren beziehungsweise eine unterschiedliche Priorisierung der in ihnen enthaltenen Kanäle unterscheiden.

Durch die unterschiedlichen Kanallisten kann somit die aktuelle Kanalvergabe in Abhängigkeit von einer vorgefunden Funksituation vorgenommen werden. Da die Kanalvergabe das Netzverhalten wesentlich mitbestimmt, kann allein durch die Vorgabe unterschiedlicher Kanallisten das Netzverhalten an die verschiedenen Netzsituationen angepaßt werden. Die nur begrenzt vorhanden Netzresourcen können an diejenigen Teile eines Netzes umverteilt werden, an denen sie jeweils am vordringlichsten benötigt werden.

Dies wirkt sich besonders vorteilhaft auf die Verkehrskapazität und die Betriebssicherheit des Netzes aus.

Eine bevorzugte Ausführungsform der Erfindung sieht vor, daß zur Kanalvergabe ein dynamisches Kanalzuweisungsverfahren verwendet wird.

Dynamische Kanalzuweisungsverfahren, wie beispielswiese das sogenannte "channel segregation", erneuern mit jeder Kanalvergabe die verwendete Kanalliste. Hierdurch ist zwar eine längerfristige Anpassung an die jeweils vorgefundene Verkehrssituation möglich; wechselnde Verkehrssituationen verhindern jedoch, daß sich eine optimale Kanalliste einstellen kann, weil die Kanalliste ständig auf die wechselnde Verkehrssituation umschwenken und hinterhereilen muß.

Besonders vorteilhaft auf dynamische Kanalzuweisungsverfahren wirkt sich daher insbesondere aus, daß für bestimmte ausgewählte Funksituationen jedem Kanalzuweisungsverfahren eine entsprechende Anzahl von Kanallisten zur Verfügung steht. Bei Wechsel der Funksituation bleiben die nicht ausgewählten Kanallisten unangetastet und ermöglichen es so, bei Auswahl einer dieser Kanallisten, an der gleichen Stelle fortzufahren, an der eine Kanalliste verlassen wurde. Bei ständig wechselnden Funksituationen wird hierdurch erst die Voraussetzung für eine Konvergenz der jeweiligen Kanalliste zu einem Optimum geschaffen. Bei Änderung der aktuellen Funksituation steht die entsprechend auszuwählende Kanalliste sofort zur Verfügung, so daß auch eine wesentlich schnellere Reaktion auf Änderungen der Funksituation möglich ist, als über die langfristige Komponente eines herkömmlichen dynamischen Kanalzuweisungsverfahrens.

Dynamische Kanalzuweisungsverfahren stellen eine Möglichkeit dar, die Vergabe von Funkkanälen während des Netzbetriebes im praktischen Betrieb zu erlernen. Dadurch ist es nicht mehr erforderlich, in einem Planungsschritt alle Funksituationen wie beispielsweise auch Verkehrsdichte und Verträglichkeitsinformation vorauszuberechnen beziehungsweise abzuschätzen. Da die Kanalzuweisungen nun nicht mehr auf unsicheren Planungsdaten beruhen, werden die Zahl der Gesprächsverluste gesenkt und die Gesprächsqualitäten erhöht. Durch die verschiedenen für die jeweiligen Funksituationen vorgesehenen Kanallisten wird es ermöglicht, daß sich ein solches Funknetz ohne erneute Planung geänderten Ausbreitungs- und Verkehrsbedingungen besonders schnell anpaßt, ohne die alten Funksituationen zu vergessen.

Zur Erfassung der räumlichen Komponente einer Funksituation ist es vorteilhaft auch Feststationen anderer Funkzellen, vorzugsweise der benachbarten Funkzellen mit einzubeziehen.

Die Einbeziehung anderer Feststationen kann zum einen dadurch geschehen, daß eine Mobilstation funktechnische Parameter anderer Feststationen mißt und/oder zum anderen auch dadurch, daß die Feststationen die funktechnischen Parameter der Mobilstationen, die sich in anderen Funkzellen befinden, messen. Dabei müssen nicht alle im Funknetz vorhandenen Feststationen einbezogen werden. Je nach Anwendungsfall kann nur eine bestimmte Auswahl von anderen Feststationen, beispielsweise nur die unmittelbar benachbarten Feststationen mit einbezogen werden.

Im einfachsten Fall genügt zur Messung und Auswertung funktechnischer Parameter die Feldstärke, mit der eine Mobilstation andere Feststationen empfängt, bzw. die anderen Feststationen die jeweils betrachtete Mobilstation empfangen. Ferner geeignet sind beispielsweise Signal- zu Interferenzverhältnis, die Entfernung zwischen Mobilstation und Feststationen, etc..

Durch Klassifizierung entstehen auf diese Weise virtuelle Teilzellen, wobei in einer Teilzelle ähnliche funktechnische Verhältnisse anzutreffen sind. Eine Teilzelle kann, muß aber nicht notwendigerweise einem bestimmten örtlich zusammenhängenden Gebiet der Funkzelle entsprechen.

Zufriedenstellende Ergebnisse lassen sich bereits durch Verwendung der Signalstärke als funktechnischer Parameter erzielen. Vorzugsweise können hierbei die gemessenen Signalstärken in einem Signalstärkenvektor zusammengefaßt werden, wobei beispielsweise das erste Element dieses Signalstärkenvektors die Signalstärke der eigenen Feststation und die anderen Elemente die Signalstärke der anderen Feststationen angibt.

Besonders vorteilhaft ist es die gemessenen Signalstärken der benachbarten Feststationen zu der gemessenen Signalstärke der Feststation der eigenen Funkzelle ins Verhältnis zu setzen. Hierdurch erhält man eine Aussage über die Interferenzsituation an dem Aufenthaltsort von einer jeweiligen Mobilstation. Werden hierzu die gemessenen Signalstärken logarithmisch bewertet, so erhält man durch Subtraktion des ersten Elements des Signalstärkenvektors von allen anderen Elementen einen Vektor mit Verhältniszahlen. Da dieser Vektor die Interferenzsitusation an dem Aufenthaltsort der Mobilfunkstation wiederspiegelt, wird dieser Vektor im folgenden als Interferenzvektor bezeichnet.

Besonders vorteilhaft zur Klassifikation ist es, die ins Verhältnis gesetzten Signalstärken mit einem vom Funksystem abhängigen Schwellenwert zu vergleichen. Dieser funksystemabhängige Schwellenwert ist beispielsweise der maximal zulässige Gleichkanalstörabstand. Bei Überschreitung dieses Schwellenwertes ist somit eine Störung wahrscheinlich, bei Unterschreitung des Schwellenwertes jedoch unwahrscheinlich. Je nach Unter- oder Überschreitung des Schwellenwertes kann somit eine duale Aussage "stört" bzw. "stört nicht" getroffen werden. Während eines Gespräches kann auf diese Weise für jede Mobilstation ein Kompatibilitätsvektor erstellt werden.

Alle Mobilstationen innerhalb einer Funkzelle mit demselben Kompatibilitätsvektor werden einer Teilzelle zugeordnet. Mittels Zuordnungstabellen kann auch eine Zusammenfassung mehrerer voneinander verschiedener Kombatibilitätsvektoren zu einer Teilzelle vorgenommen werden. Auf diese Weise wird es ermöglicht, gegebenenfalls mehrere Teilzellen mit gleicher Störsituation zusammenzufassen. Das ist beispielsweise dann von Vorteil, wenn die zusammengefaßten Teilzellen selbst ein geringes Verkehrsaufkommen aufweisen. Durch Zusammenfassung entsprechender Teilzellen können so Teilzellen mit annähernd gleichem Verkehrsaufkommen gebildet werden, wodurch das zur Verfügung stehende Kanalangebot gleichmäßig und somit besser genutzt werden kann.

Zur Erfassung der Funksituation hinsichtlich einer zeitvarianten Komponente des Kanalraums (Kanalsituation) ist insbesondere die Betrachtung funktechnischer Parameter aller zur Verfügung stehenden Kanäle geeignet.

Als funktechnische Parameter eignen sich sowohl qualitative Betrachtungen wie "Kanal ist benutzt" / "Kanal ist nicht benutzt", als auch quantitative Aussagen, wie beispielsweise die Messung der Bitfehlerrate eines jeden Kanals. Durch Bewertung eines jeden einzelnen Kanals, beispielsweise durch Vergleich mit Grenzwerten, kann jeder Kanal klassifiziert werden. Als Klassifizierung kann im einfachsten Fall eine duale Aussage "Kanal störungsfrei" beziehungsweise "Kanal gestört" dienen. Beispielsweise durch Zuordnungstabellen ist es auch hier wieder möglich ähnliche Kanalsituationen zusammenzufassen, um so die Anzahl der zu betrachtenden Kanalsituationen zu reduzieren.

Jede auf diese Weise erfaßte Kanalsituation setzt sich zusammen aus der gegenseitigen Beeinflussung durch andere Funkzellen, soweit diese auf die betrachtete Funkzelle störend einwirken und aus der Verkehrsaktivität in der betrachteten Funkzelle. Durch zentrale Sammlung und Auswertung der Kanalsituation können diese Einflüsse auch voneinander getrennt werden und die Kanalsituation durch die getrennten Faktoren beschrieben werden.

Da bei Auswertung der Kanalsituation gleichzeitig auch der augenblickliche Aufenthaltsort einer Mobilstation bestimmt werden kann, kann durch gegenseitige Zuordnung somit eine örtliche Auflösung der Kanalsituation in einer Funkzelle vorgenommen werden. Die maximale Anzahl von unterschiedlichen Funksituationen entspricht somit dem Produkt aus der Anzahl der örtlichen Situationen und der Anzahl der zu unterscheidenden Kanalsituationen.

In einer möglichen Ausführungsform der Erfindung ist vorgesehen, die Gesprächsqualität während eines bestehenden Gesprächs zu bewerten.

Als Bewertungskriterien können beispielsweise das Signal/Interferenzverhältnis oder die Bitfehlerrate herangezogen werden. Es hat sich nämlich herausgestellt, daß zu Beginn und auch bei Netzänderungen Kanalzuordnungen mit unzureichender Qualität auftreten können. Deshalb tragen zusätzliche, vorzugsweise in regelmässigen Zeitabständen durchgeführte Qualitätsüberprüfungen, wesentlich zur Stabilisierung der Kanalverteilung bei.

Bei einer solchen Überprüfung kann beispielsweise auch gleichzeitig untersucht werden, ob die Verbindungsqualität so weit abgesunken ist, daß eine Gesprächsübergabe auf einen anderen Kanal beziehungsweise eine andere Funkzelle vorgenommen werden sollte. Vorteilhaft ist hierbei, eine Gesprächsübergabe nur dann vorzunehmen, wenn der neue Kanal eine bestimmte Verbindungsqualität erreicht. Durch einen solchermaßen vorgesehenen Sicherheitsabstand zwischen dem Qualitätswert an dem eine Gesprächsübergabe angestoßen wird und dem Qualitätswert des neuen Kanals, der die angestossene Gesprächsübergabe erst zuläßt kann einem allzuhäufigen Verbindungswechsel vorgebeugt werden.

Desweitern ist es vorteilhaft auch einen bestimmten unteren Qualtätswert vorzusehen, bei dessen Unterschreitung eine Verbindung getrennt wird. Eine Verbindungstrennung ist immer dann vorzunehmen, wenn die Verbindungsqualität keine brauchbare Verbindung mehr zuläßt und in der jeweiligen Situation keine Kanäle zur Verbindungsübergabe zur Verfügung stehen.

Durch Veränderung dieser Grenzwerte läßt sich die Netzantwort langfristig auf ein bestimmtes Verhalten ausrichten. Als Zielverhalten kommen beispielsweise in Frage eine Kapazitätssteigerung, eine Qualitätsoptimierung, eine Stabilisierung des Netzes beziehungsweise eine beliebige Kombinationen dieser Zielverhalten. Je nach gewünschtem Zielverhalten wird mittels einer geeigneten Bewertung, beispielsweise mit einer Kostenfunktion, die Reaktion auf eine Änderung eines solchen Grenzwertes überwacht. Durch Verknüpfung von systematisch durchgeführten Änderungen unter Berücksichtigung der Netzreaktion kann so das Netzverhalten auf das Zielverhalten gesteuert werden.

Im folgenden wird anhand eines Ausführungsbeispiels die Erfindung näher beschrieben und erläutert.

Es zeigen:
- Fig. 1: Struktur eines Kleinzellen-Funknetzes mit Kanalbelegung und daraus abgeleiteten Interferenzvektor zur Beschreibung der zeitvarianten Komponente der Funksituation,
- Fig. 2: dasselbe Modell wie Fig. 1 mit Bildung von Teilzellen zur örtlichen Auflösung der Funksituation,
- Fig. 3: schematischer Aufbau eines Funkempfängers zur Ausführung der Erfindung mit je einer Speicher ebene für jede auszuwertende Funksituation,
- Fig. 4: eine Zuordnungstabelle zur Reduzierung der örtlichen Auflösung auf fünf Teilzellen,
- Fig. 5 bis 8: Auschnitt aus einer Prioritätenliste für eine bestimmte Funksituation.

Das Ausführungsbeispiel beschreibt die Integration eines erfindungsgemäßen Mobilfunknetzes, in das dem Fachmann hinreichend bekannte paneuropäische digitale Mobilfunksystem GSM.
Eine Übersicht über das GSM-System findet sich beispielsweise in "AN OVERVIEW OF THE GSM-SYSTEM, Bernard J. T. Mallinder, Conference Proceedings, Digital Cellular Radio Conference, October 12-14, 1988, Hagen, Bundesrepublik Deutschland, S. 1a/1 - 1a/13.

Im GSM-System wird für die Kommunikation von Mobilstation zu einer Basisstation (Uplink) der Frequenzbereich von 890 bis 915 MHz und für die Kommunikation von Feststation zu Mobil station (Downlink) der Frequenzbereich von 935 bis 960 MHz verwendet. In jedem Frequenzband von 25 MHz halten die Trägerfrequenzen einen Trägerfrequenzabstand von 200 KHz ein. Der Zugriff auf diese Frequenzbänder erfolgt im Zeitmultiplex mit Vielfachzugriff, wodurch in jedem Frequenzband in acht Zeitschlitzen acht Benutzerkanäle zur Verfügung stehen. Die Codierung der einzelnen Benutzerkanäle, die Aufteilung der Benutzerkanäle in Zeitschlitze und die Zuordnung der Benutzerkanäle zu den einzelnen Funkkanälen ist dem Fachmann hinreichend bekannt, so daß auf diese Einzelheiten im näheren nicht mehr eingegangen werden muß.

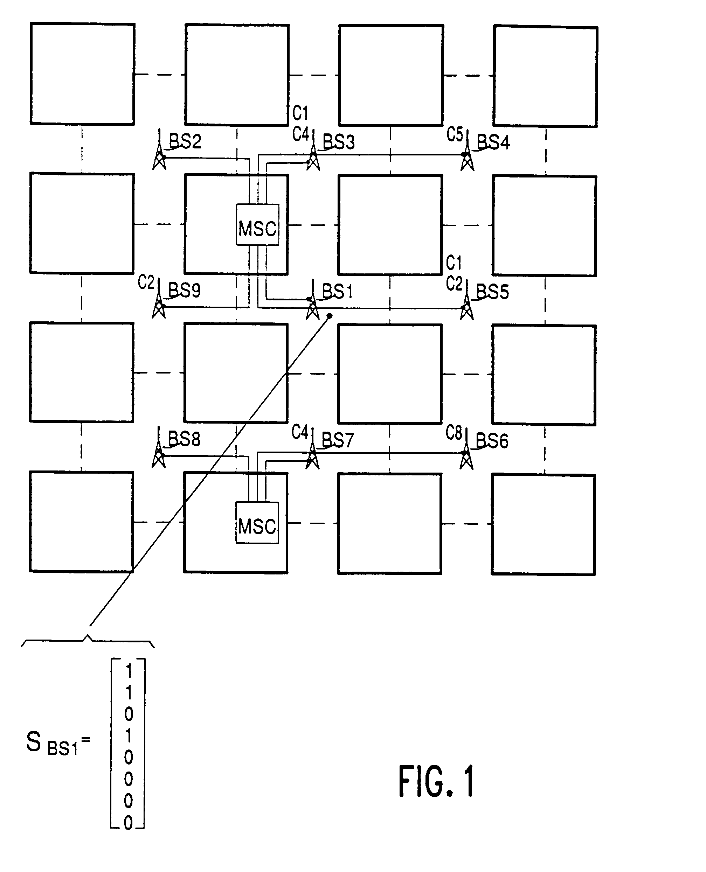

Fig. 1 zeigt die Struktur eines Kleinzellenfunknetzes innerhalb einer Großstadt. Um das Problem der hohen Verkehrsdichte in einer Großstadt zu bewältigen werden entsprechend kleine Funkzellen gebildet, sodaß das Verkehrsaufkommen wegen der geringen Flächenabdeckung einer Kleinfunkzelle entsprechend reduziert ist. Fig. 1 ist ein idealisiertes Modell, daß von senkrecht und waagrecht verlaufenden Straßen ausgeht, wobei an den Straßenseiten hohe Gebäude angeordnet worden sind. Da sich eine solche Infrastruktur beispielsweise im Stadtteil Manhattan der Großstadt New York findet, nennt man diese Modell "Manhattan-Modell".

An jeder Straßenkreuzung ist eine Feststation BS1...BS9 angeordnet. Durch die an den Straßenseiten angeordneten Gebäude wird die Funkwellenausbreitung zwischen parallel laufenden Straßen verhindert. Die Funkwellen können sich somit nur entlang der Straßen ausbreiten. Im GSM-System werden mehrere Feststationen organisatorisch von einer zentralen Einrichtung gesteuert. Da in dieser zentralen Einrichtung auch der Netzübergang zwischen Mobilfunksystem und leitungsgebundenem Kommunikationssystem vorgesehen ist, wird diese zentrale Einrichtung im Englischen "Mobile Switching Center (MSC)" genannt.

Um nicht zu unübersichtlich zu werden, wird im Ausführungsbeispiel anstelle von 125 Funkkanälen nur von acht Funkkanälen C1...C8 ausgegangen. Die Grenzen einer Funkzelle sind in Fig. 1 durch gestrichelte Linien dargestellt. Zur Erläuterung der Funksituation in einer Funkzelle sind in jeder Funkzelle von Fig. 1 die von einer Basisstation verwendeten Funkkanäle angegeben.

Im Ausführungsbeispiel wird davon ausgegangen, daß die Sendeleistung in einer Funkzelle so gewählt ist, daß jeder Funkkanal bereits in der übernächsten Funkzelle wieder verwendet werden kann. So kann beispielsweise in Fig. 1 der Funkkanal C4 sowohl von der Funkzelle der Basisstation BS3 als auch von der Funkzelle der Basisstation BS7 gleichzeitig verwendet werden. Durch die Abschirmung der Gebäude kann aber eine Funkkanalwiederholung auch bei diagonal zueinander angeordneten Feststationen vorgenommen werden. So kann beispielsweise der Kanal C1 sowohl von der Feststation BS3 als auch von der Feststation BS5 gleichzeitig genutzt werden.

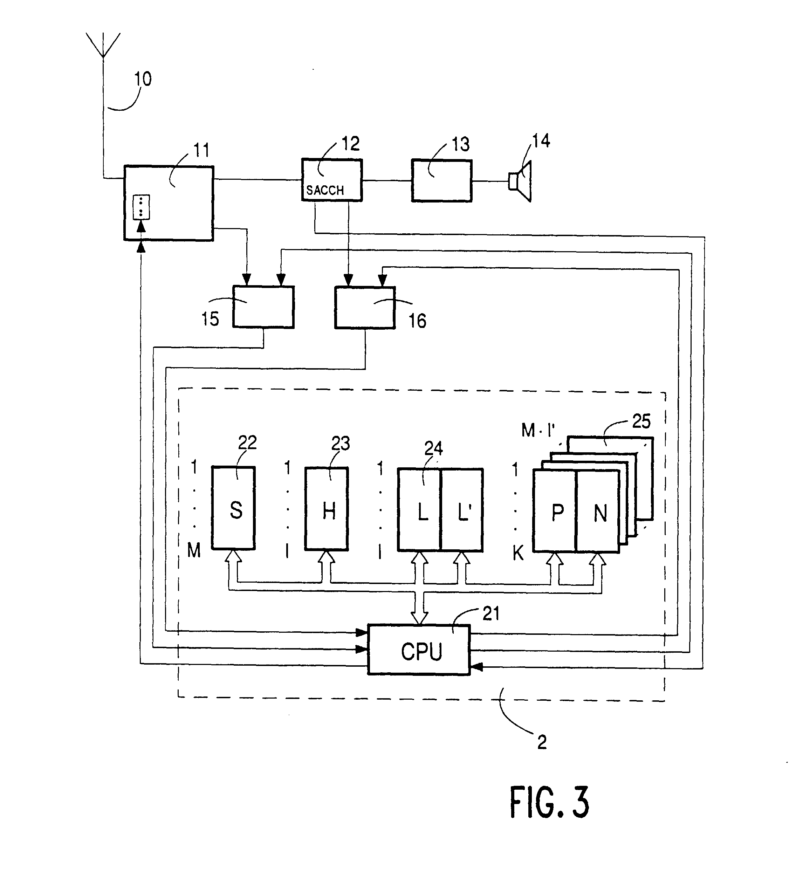

In Fig. 3 ist ein Funkempfänger schematisch dargestellt, mit welchem die jeweilige Funksituation in einer Funkzelle ermittelt werden kann. In einer digitalen Frequenzaufbereitungsstufe 11 kann durch Vorgabe einer Funkkanalnummer der Empfänger auf den vorgegebenen Funkkanal eingestellt werden. Das in eine Zwischenfrequenzlage umgesetzte Eingangssignal wird in einer digitalen Signalaufbereitungsstufe 12 ins Basisband umgesetzt und zu einem Digitalsignal zurückgewandelt. In einer niederfrequenten Verarbeitungsstufe 13 wird diese Digitalsignal durch Decodierung in ein Sprachsignal zurückgewandelt, welches über einen Lautsprecher 14 wiedergegeben werden kann.

Zur Ermittlung der jeweiligen Funksituation ist eine Steuereinrichtung 2 über entsprechende Daten- und Steuerleitungen mit dem Funkempfänger gekoppelt. Im Ausführungsbeispiel ist die Steuereinrichtung aus einer programmgesteuerten zentralen Recheneinheit 21 und verschiedenen Speichern 22 bis 25 zusammengesetzt.

Der Frequenzsynthesizer 11 des Funkempfängers ist derart aufgebaut, daß ein zur Eingangssignalstärke proportionales Signal zur Verfügung steht. Dieses Signal ist einem ersten Komparator 15 zugeführt, welcher es mit einem, von der Steuervorrichtung 2 vorgegebenen Schwellwert vergleicht. Das Ergebnis des Vergleichs wird der zentralen Steuerung 2 des Funkempfängers zurückgeführt. Desweiteren ist die digitale Signalverarbeitungsstufe 12 dazu vorgesehen mittels im Eingangssignal enthaltenen redundanten Daten zur Fehlererkennung bzw. Fehlerkorrektur eine Bit-Fehlerrate des empfangenen Signals zu bestimmen. Diese Bit-Fehlerrate ist einem zweiten Komparator 16 zugeführt, der die ermittelte Bit-Fehlerrate mit einer ebenfalls von der Steuervorrichtung 2 vorgegebenen Bit-Fehlerrate vergleicht und das Ergebnis ebenfalls der Steuerung 2 des Funkempfängers zurückführt.

In der Steuervorrichtung 2 ist ein erster Speicher 22 zur Erfassung der Funksituation S vorgesehen. Die Anzahl der Speicherplätze M dieses ersten Speichers 22 entspricht der Anzahl der zur Erfassung der Funksituation berücksichtigten Funkkanäle. Im Ausführungsbeispiel sind dies die acht Funkkanäle C1...C8.

Zur Erfassung der Funksituation S stellt die zentrale Steuervorrichtung 2 nacheinander jeden verfügbaren Funkkanal am Frequenzsynthesizer 11 ein. Die Signalstärke eines jeden Funkkanals wird vom ersten Komparator 15 mit dem vorgegebenen Schwellwert verglichen. Dieser Schwellwert ist beispielsweise so gelegt, daß ein von der Nachbarzelle benutzter Funkkanal zu einer Überschreitung des Schwellwertes führt, ein in der übernächsten Funkzelle benutzter Funkkanal hingegen unterhalb des vorgegebenen Schwellwertes bleibt. Der Ausgang des ersten Komparators 15 entspricht somit einem logischen Wert der angibt, ob ein bestimmter Funkkanal bereits belegt ist oder nicht. Die logischen Ausgangswerte des ersten Komparators 15 werden in dem ersten Speicher 22 aufeinanderfolgend abgelegt.

In Fig. 1 ist die Funksituation S_{BS1} für die Funkzelle der Basisstation BS1 angegeben. Die erste Zeile entspricht dem ersten Kanal C1 usw.. Eine Null bedeutet, daß der betreffende Funkkanal von einer anderen Funkzelle aus nicht gestört wird, eine Eins bedeutet hingegen, daß der betreffende Funkkanal von einer anderen Funkzelle gestört wird. Der erste Funkkanal C1 wird beispielsweise von der über der Feststation BS1 angeordneten Feststation BS3 als auch von der rechts von der Feststation BS1 liegenden BS5 benutzt. Die erste Zeile des Vektors der die Funksituation angibt ist somit mit einer Eins besetzt. Der Funkkanal C5 hingegen wird nur von der rechts oben liegenden, diagonal zur Feststation BS1 angeordneten Feststation BS4 genutzt, so daß durch die Abschirmung der dazwischen liegenden Gebäude keine Beeinträchtigung stattfindet. Der Eintrag der fünften Zeile des Vektors enthält somit eine Null.

Da die logischen Werte einer Aussage "stört"/"stört nicht" entsprechen, wird dieser Teil der Funksituation als Störvektor bezeichnet. Die einzelnen Elemente des Störvektors lassen sich als Binärwerte auffassen und der gesamte Störvektor als Binärzahl. Im Ausführungsbeispiel wird das erste Element des Störvektors als "Most significant Bit (MS-B)" und das letzte Element des Störvektors als "Least significant Bit (LSB)" verwendet. Hieraus ergibt sich bei dem in Fig. 1 dargestellten Störvektor nach Umrechnung die Dezimalzahl 208.

Zur örtlichen Auflösung einer Funksituation ist im Ausführungsbeispiel weiterhin vorgesehen die Signalstärken zu messen, mit denen die vier nahesten Nachbarstationen empfangen werden.

Um die nahesten Nachbarstationen von anderen Stationen unterscheiden zu können werden in dem beschriebenen Ausführungsbeispiel von einer Basisstation in einer wiederkehrenden Kontrollmitteilung Informationen über die jeweils zu dieser Basisstation benachbarten Basisstationen ausgestrahlt. Diese Information besteht im Ausführungsbeispiel aus den jeweiligen Funkkanalnummern, auf denen die benachbarten Basisstationen ihren jeweiligen Kontrollkanal unterhalten. Im GSM-System ist die Übermittlung der Nachbarbasisstationen während eines laufenden Gespräches auf einem sogenannten SACCH (slow assiociated control channel) eigentlich nur für die Vorbereitung und Durchführung eines Funkzellenwechsels vorgesehen. Diese Information wird durch die Erfindung nun auch dazu genutzt die eigene Funksituation zu bestimmen. Der Zeitmulitplexrahmen des GSM-Systems ist so aufgebaut, daß er auch Zeitschlitze enthält, die weder von einem Verkehrskanal noch von einem Kontrollkanal belegt sind. In diesen Zeitschlitzen wird der Empfänger der Mobilstation auf die Kontrollkanäle der benachbarten Basistationen abgestimmt und mißt deren Signalstärke.

Die gemessenen Signalstärken werden von der jeweiligen Mobilstation über den SACCH der Mobilstation zu der eigenen Feststation übermittelt. Gleichzeitig mißt die Mobilstation die Signalstärke mit der die eigene Feststation empfangen wird und übermittelt diesen Wert ebenfalls über den SACCH zu der eigenen Feststation.

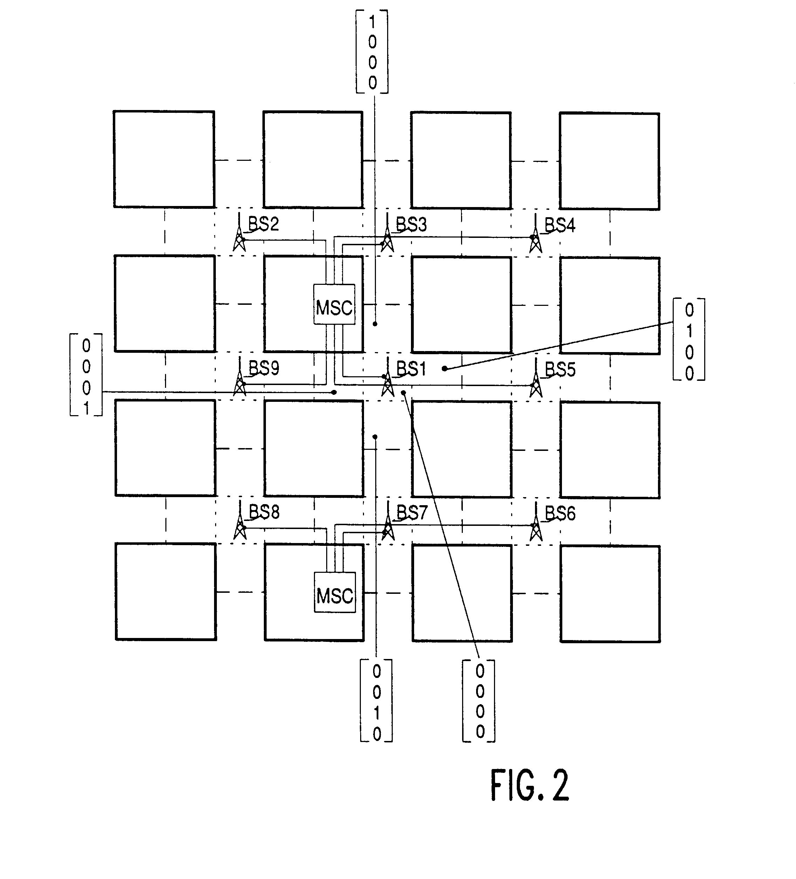

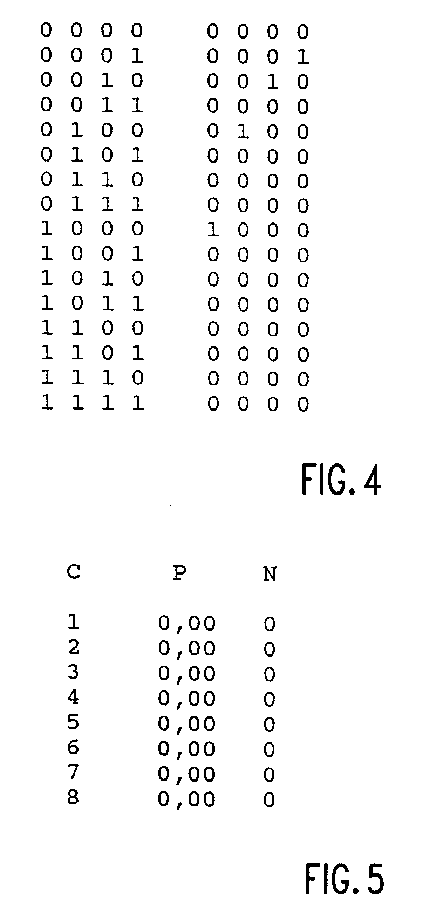

Die übertragenen Feldstärken werden in der digitalen Signalaufbreitungsstufe 12 der Basisstation aus dem SACCH ausgesondert und an die Steuervorrichtung 2 übergeben. In der Steuervorrichtung 2 welche diese Daten in einem zweiten Speicher 23 zwischengespeichert. Bei einer darauffolgenden Auswertung werden die Signalstärken H der benachbarten Basistation mit der Signalstärke der eigenen Feststation ins Verhältnis gesetzt. Im Ausführungsbeispiel wird nur eine grobe Ortsangabe benötigt, so daß durch Vergleich der Verhältniszahlen mit einem weiteren Schwellenwert eine Klassifizierung der möglichen Funkorte vorgenommen wird. Da beim Vergleich des Schwellenwerts wieder ein logischer Wert genommen wird entsteht durch diese Art der Klassifikation eine Auflösung von 2⁴ = 16 Funkorten L. In einem dritten Speicher 24 ist im Ausführungsbeispiel die in Fig. 4 wiedergegebene Zuordnungstabelle gespeichert. Von den 16 möglichen klassifizierten Funkorten L bleiben nach der Zuordnung nur noch fünf verschiedene Funkorte
L' = {(0000), (0001), (0100), (1000)} übrig. Diese grob aufgelösten Funkorte L' entsprechen jeweils einem bestimmten Teilbereich in einer Funkzelle (siehe Fig. 2).

Die gesamte Funksituation S ergibt sich somit aus der zeitlich varianten Funksituation S und der örtlichen Auflösung L'. Für jede Funksituation ist im Funkempfänger zur Speicherung einer Prioritätenliste ein eigener Speicherbereich vorgesehen, wobei die Anzahl der Speicherebenen dem

Produkt aus den Zeitvarianten Funksituationen und der Anzahl der klassifizierten Funkorte entspricht. Die Nummer der verwendeten Speicherebene setzt sich zusammen aus dem Zahlenwert des Vektors und dem Zahlenwert des klassifizierten Funkortes.

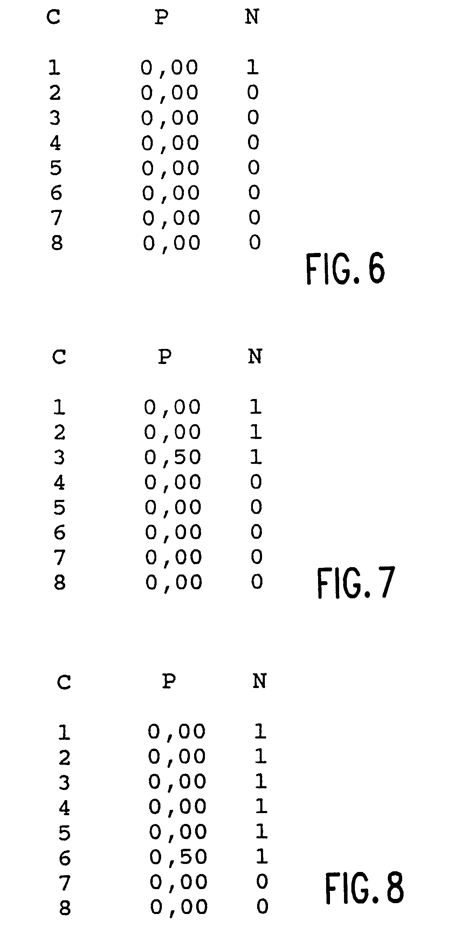

Bei der Auswahl eines Kanales wird das bekannte prioritätsgesteuerte Kanalvergabeverfahren verwendet. Hierzu ist jedem Funkkanal eine bestimmte Priorität zugewiesen. Desweiteren wird für jeden Funkkanal die Anzahl der bisher getätigten Zugriffe N auf diesem Funkkanal gespeichert. In Fig. 5 wird angenommen, daß in der betreffenden Funksituation noch keine Einträge in der Prioritätenliste enthalten sind. Alle Werte der Prioritätenliste sind daher auf Null gesetzt, ebenso die Anzahl der Zugriffe auf einen Funkkanal in der betreffenden Funksituation. Beim Zugriff auf einen Funkkanal wird in der Reihenfolge der Priorität ein Funkkanal ausgewählt. Da in der verwendeten Prioritätenliste alle Funkkanäle die gleiche Priorität haben, wird beim Ausführungsbeispiel mit dem ersten Kanal C1 begonnen. Da dieser Kanal bereits von einer Nachbarzelle verwendet wird, ist mit diesem Kanal ein Verbindungsaufbau nicht möglich. Der Kanal C1 behält die Priorität Null, die Anzahl der Zugriffe auf diesen Kanal wird um eins erhöht (Fig. 6).

Ebenso führt die versuchsweise Verwendung des Kanals C2 zu keinem Ergebnis. Der Kanal C3 hingegen wird bei der im Ausführungsbeispiel gezeigten Kanalbelegung von keiner Feststation benutzt, so daß mit diesem Kanal zunächst eine Funkverbindung aufgebaut wird. Die Priorität des betreffenden Kanals wird durch den zunächst erfolgreichen Verbindungsaufbau auf 0,5 angehoben (Fig. 7). Während der bestehenden Verbindung wird mittels des zweiten Komparators 16 die sich im Betrieb einstellende Bitfehlerrate der bestehenden Verbindung mit einem Schwellenwert überprüft. Im Ausführungsbeipiel liegen zwar keine Gleichkanalstörungen vor, dennoch kann es auf dem Kanal 3 wegen den in seiner unmittelbaren Nachbarschaft belegten Kanäle C1, C2 und C4 zu einer sogenannten kumulativen Störung kommen, die beispielsweise zu einer erhöhten Bitfehlerrate führt.

Durch die wegen der kumulativen Störung erhöhte Bitfehlerrate wird eine Gesprächsübergabe an einen anderen Kanal angestoßen. Eine Übergabe an den Kanal C4 ist wegen der Benutzung des Kanals in den Nachbarstationen BS3 und BS7 ausgeschlossen. Im folgenden wird auch davon ausgegangen, daß nach einer Gesprächsübergabe an den Kanal C5 wiederum die kumulativen Störungen zu groß sind. Schließlich wird der Kanal C6, der hinreichenden Abstand zu den benutzten Kanälen einhält, für eine ausreichende Gesprächsqualität als geeigneter Kanal Bestand haben. Beim Kanalwechsel wird wegen der minderen Gesprächsqualität die Priorität der ursprünglich gewählten Kanäle wieder herabgesetzt. Der schließlich bestehende Kanal C6 erhält die höchste Priorität (Fig. 8).

Auf diese Weise wird die für jede Funksituation geführte Prioritätenliste Kanäle enthalten, deren Priorität gegenüber den anderen Kanälen besonders hoch ist. Da die für eine Verbindung ausgesuchten Kanäle entsprechend der Reihenfolge ihrer Priorität gewählt werden, werden sich ganz spezielle Kanäle als Vorzugskanäle einstellen, wobei in jeder Funksituation sich unterschiedliche Vorzugskanäle einstellen werden.

Das Beispiel der kumulativen Störungen läßt sehr schön erkennen, warum sich in jeder Funksituation bestimmte Kanäle besser eignen als andere Kanäle. Mit der Funksituation werden jedoch wesentlich mehr Einflüsse erfaßt als nur die kumulativen Störungen. Durch Erfassung der Funksituation werden zeitlich variante Funksituationen, wie z. B. Hochlastbetrieb während der Hauptverkehrszeit, örtlich bedingte längerfristige Änderung des Verkehrsaufkommens, beispielsweise hervorgerufen durch eine Baustelle, automatisch als geänderte Funksituation erfaßt und selbständig erlernt und reguliert.

Weitere Ausgestaltungen des erfinundungsgemäßen Prinzips ergeben sich beispielsweise auch dadurch, daß die Funksituation jeweils von der betreffenden Mobilstation gemessen wird und über den Kontrollkanal zur Auswertung an die Basisstation übermittelt wird.

Vorteilhaft ist es auch erlernte Kanalzuordnungen wieder aufzulockern, um sich eventuell schneller an geänderte Situationen anzupassen. Hierzu können beispielsweise zeitlich länger zurückliegende Ergebnisse schwächer bewertet werden als aktuelle Ergebnisse.

Es bleibt selbstverständlich dem Fachmann überlassen, an welchen Stellen eines Funksystems er die Auswertung und Zuweisungsaufgaben durchführen läßt. Die im Ausführungsbeispiel beschriebenen Speicher können auch auf andere Komponenten verteilt sein. Wichtig ist lediglich das beschriebene Zusammenwirken der beschriebenen Komponenten.

## Patentansprüche

1. Zellulares Mobilfunksystem mit Feststationen und Mobilstationen bei welchem eine Auswertevorrichtung (21, 15, 16) zur Erfassung einer jeweiligen Funksituation und eine Steuervorrichtung (2) zur Auswahl eines Funkkanals aus einer in Speichermitteln gespeicherten Kanalliste vorgesehen ist,
dadurch gekennzeichnet,
daß die Steuervorrichtung (2) zur Erfassung einer jeweiligen Funksituation vorgesehen ist und daß wenigstens ein Komparator (15) zur Klassifikation einer jeweils erfaßten Funkssituation vorgesehen ist und daß die Steuervorrichtung (2) für jede klassifizierte Funksituation eine eigene Kanalliste in Speichermitteln (25) unterhält, aus welcher die Steuervorrichtung (2) entsprechend der klassifizierten Funksituation den jeweiligen Funkkanal auswählt.

2. Zellulares Mobilfunksystem nach Anspruch 1,
dadurch gekennzeichnet,
daß in der Steuervorrichtung(2) Mittel für eine dynamische Kanalzuweisung vorgesehen sind.

3. Zellulares Mobilfunksystem nach Anspruch 1 oder 2,
dadurch gekennzeichnet,
daß in der Steuervorrichtung (2) Mittel zur Erfassung der Funksituation zur Einbeziehung funktechnischer Parameter anderer Funksstationen vorgesehen sind.

4. Zellulares Mobilfunksystem nach Anspruch 1, 2 oder 3,
dadurch gekennzeichnet,
daß in der Steuervorrichtung (2) Mittel zur Erfassung der Funksituation zur Einbeziehung funktechnischer Parameter aller zur Verfügung stehenden Kanäle vorgesehen sind.

5. Zellulares Mobilfunksystem nach Anspruch 1, 2 3 oder 4,
dadurch gekennzeichnet,
daß in der Steuervorrichtung (2) Mittel zur Erfassung der Funksituation zur Bewertung der Gesprächsqualität eines Kanals während einer bestehenden Verbindung vorgesehen sind.

6. Zellulares Mobilfunksystem nach Anspruch 5,
dadurch gekennzeichnet,
daß in der Steuervorrichtung (2) Mittel zur Änderung, der bei der Bewertung der Gesprächsqualitäten verwendeten Grenzwerte vorgesehen sind.

7. Steuervorrichtung (2) für ein Mobilfunksystem mit einer Auswertevorrichtung (21, 15, 16) zur Erfassung einer jeweiligen Funksituation und mit Speichermitteln (25) in welchen zu vergebende Funkkanäle enthalten sind,
dadurch gekennzeichnet,
daß wenigstens ein Komparator (15) zur Klassifikation einer jeweils erfaßten Funkssituation vorgesehen ist und daß die Steuervorrichtung (2) für jede klassifizierte Funksituation eine eigene Kanalliste in Speichermitteln (25) unterhält, aus welcher die Steuervorrichtung (2) entsprechend der klassifizierten Funksituation den jeweiligen Funkkanal auswählt.

8. Steuervorrichtung nach Anspruch 7
dadurch gekennzeichnet,
daß die Auswertevorrichtung (21, 15, 16) noch weitere Auswertemittel (21, 23) umfaßt, mit welchen von einer Mobilstation stammende Kontrolldaten bei der Auswahl eines Speicherbereiches berücksichtigt werden.

9. Steuervorrichtung nach Anspruch 7 oder 8
dadurch gekennzeichnet,
daß Klassifizierungsmittel (21, 24) vorgesehen sind, die die von der Auswertevorrichtung (21, 15, 16) und/oder Auswertemitteln (21, 23) gewonnenen Daten in verschiedenen Datengruppen zusammenfassen.

## Claims

1. A cellular mobile radio system comprising fixed stations and mobile stations, in which system an evaluation circuit (21, 15, 16) is provided for detecting a respective radio situation, and a controller (2) for selecting a radio channel for a channel list stored in storage means, characterized in that the controller (2) is provided for detecting a respective radio situation and in that at least one comparator (15) is provided for classifying a respective detected radio situation and in that the controller maintains for each classified radio situation its own channel list in storage means (25) from which list the controller (2) selects the respective radio channel in accordance with the classified radio situation.

2. A cellular mobile radio system as claimed in Claim 1, characterized in that means for a dynamic allocation method are provided in the controller (2).

3. A cellular mobile radio system as claimed in Claim 1 or 2, characterized in that the controller (2) includes means for detecting the radio situation to take radio engineering parameters of other fixed stations into account.

4. A cellular mobile radio system as claimed in Claim 1, 2 or 3, characterized in that the controller (2) includes means for detecting the radio situation to take radio engineering parameters of all available channels into account.

5. A cellular mobile radio system as claimed in Claim 1, 2, 3 or 4, characterized in that the controller (2) includes means for detecting the radio situation to evaluate the call quality of a channel during an existing connection.

6. A cellular mobile radio system as claimed in Claim 5, characterized in that the controller (2) includes means for changing the limit values used for the evaluation of the call qualities.

7. A controller (2) for a mobile radio system comprising an evaluation circuit (21, 15, 16) for detecting a respective radio situation and including storage means (25) containing radio channels to be allocated, characterized in that at least one comparator (15) is provided for classifying a respectively detected radio situation and in that the controller (2) maintains for each classified radio situation its own channel list in storage means (25) from which list the controller (2) selects the respective radio channel in accordance with the classified radio situation.

8. A controller as claimed in Claim 7, characterized in that the evaluation circuit (21, 15, 16) comprises further evaluation means (21, 23) by which control data coming from a mobile station are taken into account when a storage area is selected.

9. A controller as claimed in Claim 7 or 8, characterized in that classification means (21, 24) are provided which combine the data coming from the evaluation circuit (21, 15, 16) and/or evaluation means (21, 23) to various data groups.

## Revendications

1. Système de radiotéléphone mobile cellulaire avec des stations fixes et des stations mobiles, un dispositif d'évaluation (21, 15, 16) étant prévu en vue de l'enregistrement d'une situation radio respective et un dispositif de commande (2) en vue de la sélection d'un canal radio à partir d'une liste de canaux enregistrée dans des moyens de mémoire,
caractérisé en ce
que le dispositif de commande (2) est prévu en vue de l'enregistrement d'une situation radio respective et qu'au moins un comparateur (15) est prévu en vue de la classification d'une situation radio respectivement enregistrée et que le dispositif de commande (2) entretient pour chaque situation radio classée une liste spécifique de canaux dans des moyens de mémoire (25) à partir de laquelle le dispositif de commande (2) sélectionne le canal radio respectif en fonction de la situation radio classée.

2. Système de radiotéléphone mobile cellulaire selon la revendication 1,
caractérisé en ce que des moyens pour une affectation dynamique des canaux sont prévus dans le dispositif de commande (2).

3. Système de radiotéléphone mobile cellulaire selon l'une des revendications 1 ou 2,
caractérisé en ce que des moyens en vue de l'enregistrement de la situation radio sont prévus dans le dispositif de commande (2) en vue d'intégrer les paramètres techniques radio d'autres stations radio.

4. Système de radiotéléphone mobile cellulaire selon l'une des revendications 1, 2 ou 3,
caractérisé en ce que des moyens en vue de l'enregistrement de la situation radio sont prévus dans le dispositif de commande (2) en vue d'intégrer les paramètres techniques radio de tous les canaux disponibles.

5. Système de radiotéléphone mobile cellulaire selon l'une des revendications 1, 2, 3, ou 4,
caractérisé en ce que des moyens en vue de l'enregistrement de la situation radio sont prévus dans le dispositif de commande (2) en vue de l'évaluation de la qualité de la conversation d'un canal pendant une liaison existante.

6. Système de radiotéléphone mobile cellulaire selon la revendication 5,
caractérisé en ce que des moyens sont prévus dans le dispositif de commande (2) en vue de la modification des valeurs-limites utilisées pour l'évaluation des qualités de conversation.

7. Dispositif de commande (2) pour un système de radiotéléphone mobile avec un dispositif d'évaluation (21, 15, 16) en vue de l'enregistrement d'une situation radio respective et avec des moyens de mémoire (25) dans lesquels sont contenus des canaux radio à affecter,
caractérisé en ce qu'au moins un comparateur (15) est prévu en vue de la classification d'une situation radio respectivement enregistrée et que le dispositif de commande (2) entretient pour chaque situation radio classée une liste spécifique de canaux dans des moyens de mémoire (25) à partir desquels le dispositif de commande (2) sélectionne le canal radio respectif en fonction de la situation radio classée.

8. Dispositif de commande selon la revendication 7,
caractérisé en ce que le dispositif d'évaluation (21, 15, 16) comprend encore d'autres moyens d'évaluation (21, 23) avec lesquels les données de contrôle provenant d'une station mobile sont prises en considération pour la sélection d'une zone de mémoire.

9. Dispositif de commande selon l'une des revendications 7 ou 8,
caractérisé en ce que des moyens de classification (21, 24) sont prévus pour rassembler les données obtenues par le dispositif d'évaluation (21, 15, 16) et/ou les moyens d'évaluation (21, 23) dans les différents groupes de données.
